Europäisches Patentamt

European Patent Office

Office européen des brevets

(11) Publication number: **0 087 258**
A2

# EUROPEAN PATENT APPLICATION

(21) Application number: 83300734.7

(51) Int. Cl.³: **B 62 B 1/02**

(22) Date of filing: 15.02.83

(30) Priority: 18.02.82 GB 8204870

(43) Date of publication of application:
31.08.83 Bulletin 83/35

(84) Designated Contracting States:
AT BE CH DE FR GB IT LI LU NL SE

(71) Applicant: LIONWELD LIMITED
Marsh Road
Middlesborough Cleveland TS1 5JS(GB)

(72) Inventor: Fraser, James Edward
42 Grosvenor Road
Billingham Cleveland(GB)

(74) Representative: Behrens, Clemency Anne Susan
c/o CAS Behrens & Co 5A Hereford Road
Harrogate North Yorkshire HG1 2NP(GB)

(54) Foldable wheelbarrow.

(57) A wheelbarrow has a single wheel mounted to a foldable body having carrying handles and legs. The body has walls and is defined by a frame which is freely pivotable between an open erected position in which it supports the walls and a storage position. At least two opposed walls of the body are attached to the frame at one edge only and are pivotable from a substantially upright position in which they hold the frame erect to a position which allows the frame to fold. The wheel axle is carried by a support which is rotatable with respect to the body to enable the wheel to be rotated to lie substantially parallel to the base of the folded body. In two embodiments described, the support is mounted on a rod which is rotatable with respect to the body through a bracket attached to or integral with the body. A lever attached to the rod at the rear of the body enables the wheel to be rotated from the normal operating position and a latch is provided to lock the lever when the barrow is to be used.

FIG.1.

EP 0 087 258 A2

0087258

-1-

## FOLDABLE WHEELBARROW

The present invention relates to foldable
wheelbarrows.

### BACKGROUND OF THE INVENTION

Foldable wheeled containers are becoming
increasingly popular as space becomes more restricted.
Most foldable containers have two wheels, which eases
the mechanical problems of foldability, and for some
applications this is adequate. However this arrangement
makes the container less manouvreable, which is undesirable
where the container is a wheelbarrow.

French Patent specification No 2179657 describes
a wheelbarrow which is seeking to solve the same problem
as the present invention. In this prior specification the
walls fold inwardly and the wheel is removed. This
arrangement has the disadvantages both of limited adaptability
and the risk of misplacing the wheel.

### OBJECT OF THE INVENTION

It is the object of the present invention to
provide an improved wheelbarrow which can be folded to
define a reduced space for storage purposes.

## BRIEF SUMMARY OF THE INVENTION

In accordance with the present invention there is provided a wheelbarrow comprising a single wheel attached to a foldable body, wherein the wheel is mounted to pivot with respect to the body to lie substantially parallel to the base of the folded body, there being provided a locking mechanism for locking the wheel in its erected position for use.

Advantageously the body is defined by walls and a frame, the frame being freely pivotable between an open erect position in which it supports the said walls and a closed folded position, releaseable locking means being provided for locking the frame in the erect position.

The frame may comprise upper and lower frame portions connected together by at least one intermediate member for pivotal movement about at least two pivotal axes in such a way that the frame portions can be freely moved towards and away from one another to fold and erect the body when the said locking means is released.

The said intermediate member may include the front wall of the body. In one embodiment two rods connect the upper and lower frame portions as intermediate members and are pivotally attached thereto. The attachment of the two rods to the upper frame portion is on one pivotal axis and to the lower frame portion is about a second pivotal axis.

Preferably the wheel is mounted to pivot about an axis parallel to the direction of motion of the barrow.

### BRIEF DESCRIPTION OF THE DRAWINGS

The invention will now be described, by way of example, with reference to the accompanying drawings in which:-

Figure 1 is a perspective view of a wheelbarrow in accordance with the present invention with two sides ready for folding,

Figure 2 is a perspective view of the barrow of

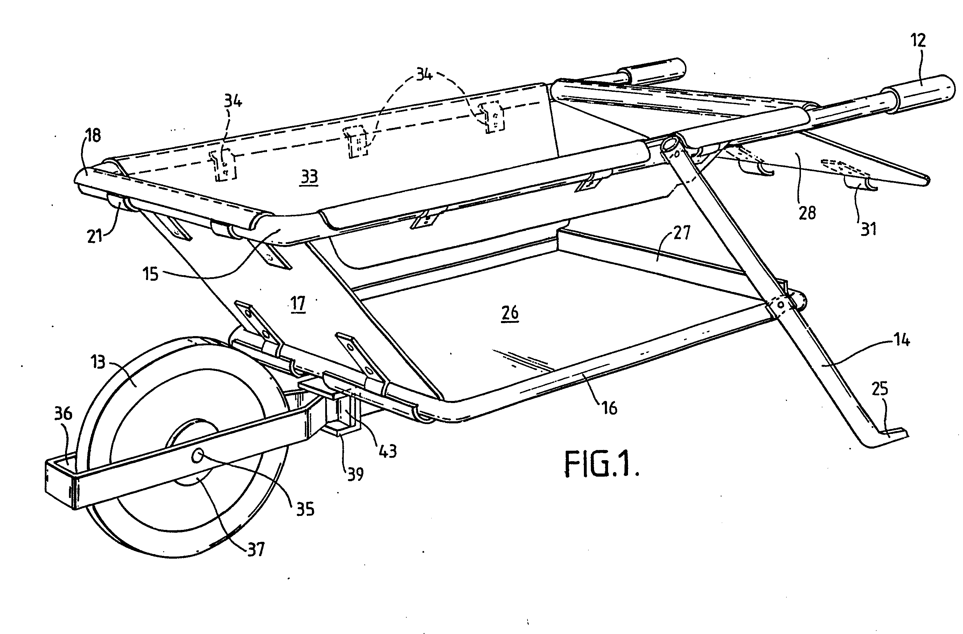

Figure 1 nearer its folded position,
with the wheel half-turned,

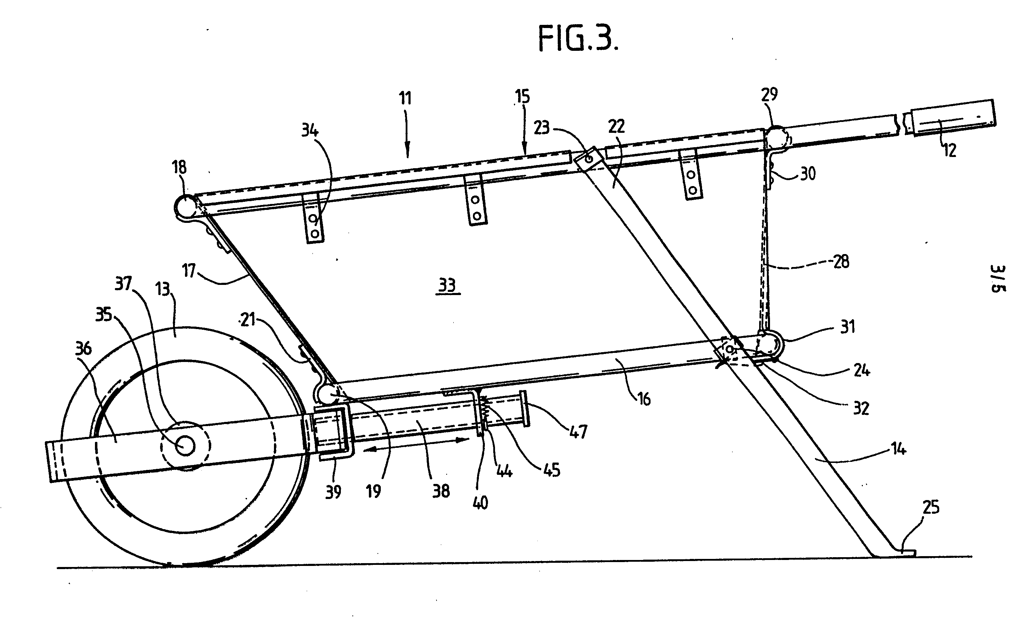

Figure 3 is a side view of the wheelbarrow of
Figure 1,

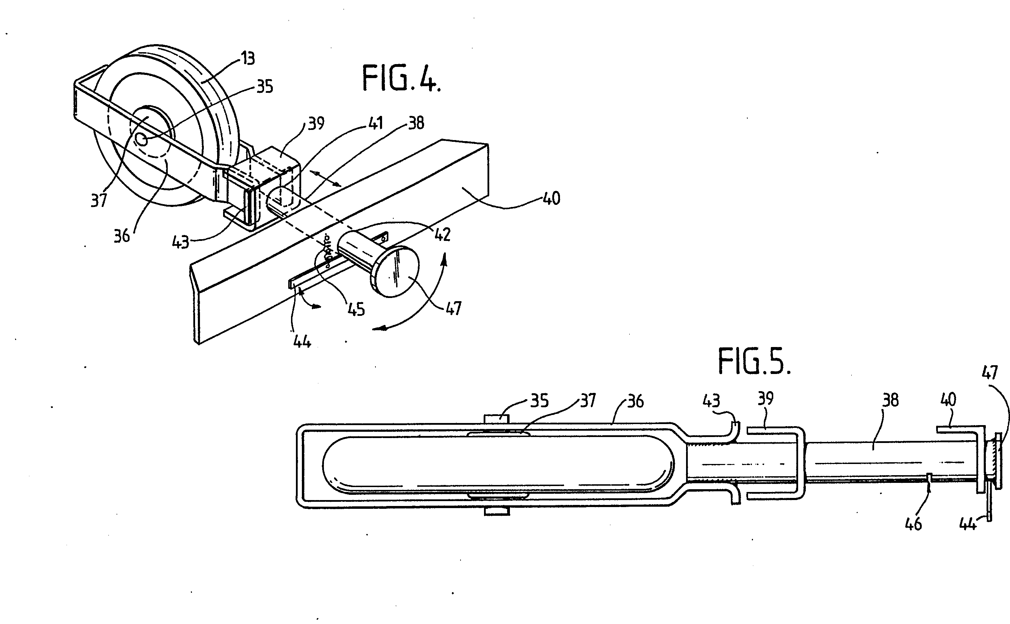

Figure 4 is a perspective view of the wheel assembly
illustrating the locked working position
of the wheel ,

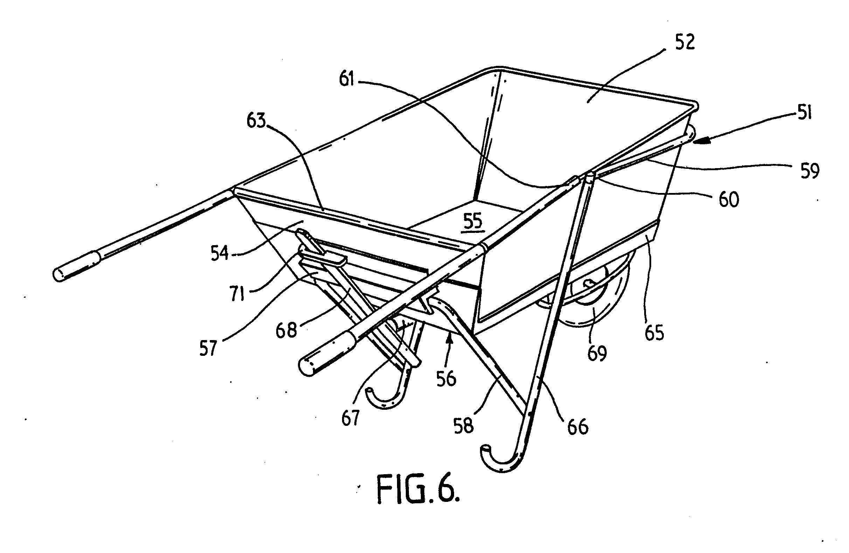

Figure 5 is a side view of the wheel assembly
of Figure 1 illustrating the folded position
of the wheel, and

Figure 6 is a perspective view of a second embodiment
of the invention.

## SPECIFIC DESCRIPTION

The wheelbarrows illustrated in the drawings
are designed for farming and building applications
and therefore have solid and rigid sides for strength
and durability. It will be appreciated that for .
other applications flexible sides might be preferred.
If liquid loads, such as cement, are to be transported,
a piece of lining material could be used to line the
barrow body. If preferred the body may incorporate
such a liner, if flexible, attached to the upper
members of the frame. Such a liner would preferably
be replaceable.

The wheelbarrow of Figure 1 has a body 11,
handles 12 by means of which the barrow is lifted and
propelled on a single wheel 13, and legs 14 on which
the body is supported when the barrow is stationary.
The body comprises a frame of tubular steel including an
upper rectangle 15, two sides of which are extended
to form the handles 12; and a lower rectangle 16 which
is smaller than, and parallel to, the upper rectangle 15.
The frame also includes a front plate 17 which is a wall
of the body, the top and bottom of which are turned round
parallel sides of the upper and lower rectangles to form hinges 18 and 19 respectively. The plate 17 is secured by brackets 21. The frame is completed by two tubular steel rods 22 arranged parallel to the front plate 17 and hinged to the upper and lower rectangles at 23 and 24 respectively. The hinges 18, 19, 23 and 24 on each side of the body form the corners of an articulated parallelogram, the sides of which include parts of the upper and lower rectangles 15 and 16.

The tubular steel rods 22 are extended to form the legs 14 and feet 25. The rods 22 are pivoted to the rectangles 15 and 16 using pivot cups (not shown) rivetted together, one cup engaging the rod 22 in each case and the other the rectangle 15 or 16 respectively. The tubing is bent where appropriate to allow clearance for the rivet head.

It will be seen that the arrangement of the rods 22 parallel to the front plate 17 makes the side of the frame into a parallelogram, which enables the upper and lower rectangles 15 and 16 to be moved towards one another to fold the body 11. The base 26 of the body is solid and has rims 27 at the sides by means of which it is attached to the lower rectangle 16 of the frame. The body 11 includes a back wall plate 28 which is turned round the side of the upper rectangle which is opposite to the front plate 17 to form a hinge 29. The back plate is secured by brackets 30. Additionally two fixing bars 31 are provided to lock the back plate 28 in the erected position of the barrow to prevent the body collapsing while in use. The fixing bars 31 are attached to the back plate 28 but extend below the back plate to curve round the back side of the lower rectangle of the frame. Two toggle catch fasteners 32 are fixed to the underside of the bottom plate or base 26 which catch and hold the end of the respective bars 31 to secure the back plate in the erected position.

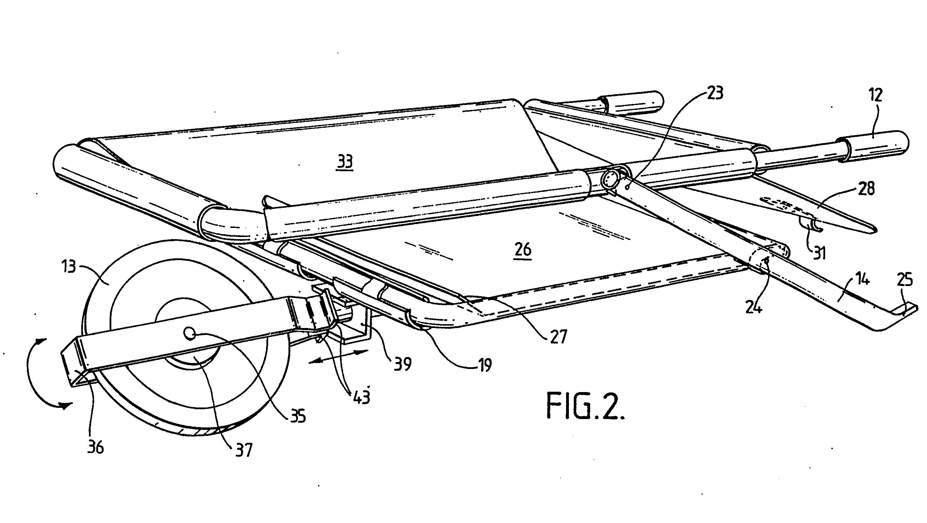

Two side plates 33 defining the side walls of the body have their tops bent round respective ones of the other two sides of the upper rectangle 15 to form respective hinges and are secured by brackets 34. The side plates 33 are rigid, and are pivotable inwardly of the body to let the frame fold. When erected the side plates abut the rim 27 or the sides of the lower rectangle 16 of the frame. The side plates are extended rearwardly slightly so that the back plate 28 comes between them when it is in the locked position and thus prevents the side plates 33 folding when the body is erected. In practice locking the back plate will be sufficient to keep the body erect. It will be observed from Figure 2 that the forward ends of the side plates 33 are curved inwardly so that when the barrow is erected there are no gaps in the body.

The single wheel 13 has its axle 35 pivotally mounted to a support 36 with bearings 37 therebetween. The support 36 is welded to a rod in the form of a steel tube 38 which tube is supported on the underside of the bottom plate 26 of the body by a channel-shaped bracket 39 and an angle bracket 40. The tube 38 is freely slideable through an aperture in the bracket 39 and an aperture 42 in the bracket 40, and is also rotatable with respect to both brackets. The wheel 13, axle 35, support 36 and the tube 38 form the wheel assembly for the wheelbarrow.

The support 36 has two outwardly curved lips 43 at its inward end. In the operating position of the wheel in which it is upright, the lips 43 extend outwardly horizontally and the support can slide into the channel-shaped bracket 39 as the tube is pulled rearwardly through the bracket. Once the wheel 13 is in the correct position with the lips 43 cooperating with the channel-shape of the bracket 39, it is held there by a locking catch comprising a locking bar 44 which is pivotally mounted to the angle
bracket 40 and is biassed upwardly by a spring 45 attached
at one end to the bar 44 and at the other end to the angle
bracket 40. The locking bar 44 engages a notch 46 in the
tube 38 and is held there by a spring 45 until the bar is
lowered against the spring bias for the barrow to be folded.
In the operating position, the wheel is prevented from
pivoting by the engagement between the lips 43 and the
upper and lower sides of the channel shaped bracket 39.

When the wheel is to be rotated for storage of
the barrow, the bar 44 is pulled out of the notch 46 and
the tube is pushed forwardly, (or the wheel pulled) through
the brackets 39 and 40. The forward movement of the tube
38 is limited by a circular stop plate 47 welded to the
end of the tube, and which is too big to pass through the
aperture in the bracket 40.

At the forward position of the wheel assembly the
support 36 is no longer in the channel 39 and therefore
the wheel can be freely rotated through about 90$^\circ$ to the

position shown in Figure 5. In this folded position, the
wheel is ———— substantially in a parallel plane to the
base of the body, in line with the body, and is held against
longitudinal movement of the tube 38 by engagement between
the lips 43 and the channel 39.

It will be appreciated that the locking catch
could be mounted in the channel bracket instead of the
angle  bracket 40, or that alternative locking arrangements
could be employed.

Once the wheel has been pivoted for storage as
described above the barrow body can be folded. To fold
the body the toggle catch fasteners 32 are released so that
the back plate can be lifted up. The side plates 33 are
then pivoted inwardly of the  body so that the parallelogram
frame can be collapsed by moving the upper rectangle 15
towards the lower rectangle 16.

Thus there is provided in this embodiment a strong and sturdy wheelbarrow with a very simple mechanism which enables the barrow to be folded and erected with very little effort. By using a frame to support the walls , the barrow is able to take much heavier loads. The pivoting of the wheel enables the wheel to be folded out of the way, without removing it from the barrow, in a simple way.

In a modification of this embodiment the wheel support rod extends under the body to a position slightly beyond the rear of the barrow body where it is rigidly attached to a lever. By turning the lever the rod pivots on its axis so turning the wheel between the erect and the folded positions. When the lever is upright, indicating that the wheel is also upright, it may be engages in a latch on the frame to prevent pivotal movement of the wheel while the barrow is in use. This arrangement does away for the need of cooperating channel shaped bracket 39 and lips 43. A further advantage of this modification is that the lever may also be used to lock the back plate in the erected position so dispensing with the need for toggle fasteners. The operation of folding and erecting the barrow may now be carried out from the user's normal operating position without having to invert the barrow.

A second embodiment is illustrated in Figure 6 and operates in a similar way to the first embodiment incorporating the wheel rotating and locking mechanism described in the immediately preceding paragraph. In this embodiment the wheelbarrow comprises a foldable body defined by a frame 51 and four walls 52,53 and 54. The frame includes a base 55 which has an upwardly directed flange 56 at the rear thereof. The flange acts both as an abutment for the rear wall 54, and to support a latch channel 57 into which a leg support or locking bar 58 is fitted in the erect position of the barrow. (see hereafter).

The frame comprises an upper rectangle , the front half 59 of which is hinged at 60 to the sides 61 of the rear half. The sides of the rear half are extended to define the carrying handles 62 and a cross bar 63 of the upper rectangle supports the rear wall 54 in a pivotable fashion. The front half 59 of the upper rectangle loops round the front wall 52 to support the front wall and is attached thereto by brackets . The side walls 52 each have the rearward half of their upper edge folded over the sides 61 of the rear half of the upper rectangle to form a hinge so that they can be pivoted out of the path of the collapsing frame. In the erected position of the barrow the rear wall engages the flange 56 and the side walls are pivoted outwardly until they engage a rim 65 of the base 55. The sides and rear wall in these positions prevent the frame folding when the barrow is in use.

Two legs 66 are each pivoted at their upper ends to the hinge 60 of the frame. A U-shaped locking bar 58 is pivoted at each end thereof to a respective leg 66. The locking bar 58 can be caught under the latch channel 57 to act both as a support for the leg 66 in the erect position, and as a lock for the frame, which cannot cannot collapse while the bar 58 is located in the channel 57.

The wheel axle is carried in a support in the way described with reference to the Figures 1 to 5. The support includes a rod 67 which passes under the wheelbarrow body through a supporting bracket. At the rear of the body the rod 67 is fixedly secured to a lever 68. The lever is rotatable to rotate the rod and hence pivot the wheel 69 through substantially $90^{\circ}$ so that the wheel can lie aside the folded barrow. The precise angle through which the wheel is pivoted is not important, but for convenience it is likely to be at least $80^{\circ}$ and not more than $100^{\circ}$.

When the wheel is rotated to the erect position in which it is substantially perpendicular to the base of the barrow, the lever 68 is caught in a latch 71 mounted on the flange 56. This acts to lock the wheel in the vertical position.

To fold the barrow the lever 68 is first released from the latch 71 and the wheel is pivoted into the folded position. The locking bar 58 is then released from the latch channel 57. At this stage the body is held erect only by the position of the rear and side walls. On pivoting these members about their upper edges towards the centre of the barrow the frame will automatically fold about a hinge at the front of the body which connects the base 55 and the front wall 52. As the locking bar is now released the legs 66 can also be folded towards the body of the barrow.

WHAT WE CLAIM IS:

1.      A wheelbarrow comprising a single wheel attached to a foldable body characterised in that the wheel is mounted to pivot with respect to the body to lie substantially parallel to the base of the body in the folded position, there being provided a locking means for locking the wheel in its erect position for use.

2.      A wheelbarrow according to claim 1 characterised in that the body is defined by walls and a frame, the frame being freely pivotable between an open erect position in which it supports the walls, and a closed folded position, releaseable locking means being provided for locking the frame in the erect position.

3.      A wheelbarrow according to claim 2 characterised in that the frame comprises upper and lower frame portions connected together by at least one intermediate member for pivotal movement about at least two pivotal axes in such a way that the upper and lower frame portions can be freely moved towards and away from one another to fold and erect the body when the said locking means is released.

4.      A wheelbarrow according to claim 3 charaterised in that the upper and lower frame portions are connected together by intermediate members about four pivotal axes which form an articulated parallelogram on each side of the frame.

5.      A wheelbarrow according to any of claims 2 to 4 characterised in that a rigid front wall of the body forms an integral part of the frame.

6.          A wheelbarrow according to any of claims
2 to 5 characterised in that the walls are rigid and at
least two opposed walls are each attached to the frame at
one edge thereof to be pivotable from an erect position,
in which they lock the frame against its folding movement,
to a folded position which allows such folding movement.

7.          A wheelbarrow according to any of claims
2 to 6 characterised in that at least two of the walls
bend inwardly at at least one edge thereof.

8.          A wheelbarrow according to any of claims
2 to 7 including legs, characterised in that the legs
are pivotally mounted to the body so that they can be
folded towards the body when the wheelbarrow is folded.

9.          A wheelbarrow according to claim 8
characterised in that the legs are pivoted twice to
the frame so that folding the body automatically folds
the legs.

10.          A wheelbarrow according to claim 9 as
appendant to claim 3 characterised in that the legs are
pivoted to the upper and lower frame portions and form
intermediate members for connecting the frame portions
together.

11.          A wheelbarrow according to claim 8
characterised in that the legs are pivotally connected
to a locking bar which bar can be releasably held on the
body to lock the legs and frame in the erect position.

12.          A wheelbarrow according to any of the preceding
claims characterised in that the wheel axle is rotatable
in a wheel support and in that the wheel is pivoted with
respect to the body by rotating the wheel support about
an axis substantially parallel to the direction of
motion of the barrow in use.

13.      A wheelbarrow according to claim 12
characterised in thet the wheel support includes a rod
which freely passes through and is supported by a
bracket which bracket cooperates with the support so
that, in the operating position of the wheel and rod,
the support is locked against undesirable pivotal
movement.

14.      A wheelbarrow according to claim  12
characterised in that the wheel support includes a rod
which freely passes through and is supported by a bracket,
the rod extending to the rear of the body and being
connected to a lever for rotating the wheel, there being a latch for
releaseably holding the lever to lock the wheel for use.

15.      A wheelbarrow substantially as herein described
with reference to Figures 1 to 5 of the accompanying
drawings.

16.      A wheelbarrow substantially as herein
described with reference to Figure 6 of the accompanying
drawings.

FIG.1.

FIG.2.

FIG.3.

0087258

FIG.4.

FIG.5.

0087258

FIG.6.